# EUROPÄISCHE PATENTSCHRIFT

(11) **EP 1 460 720 B1**
(45) Veröffentlichungstag und Bekanntmachung des Hinweises auf die Patenterteilung: **14.05.2008**
(21) Anmeldenummer: 03006082.6
(22) Anmeldetag: 19.03.2003
(51) Int. Cl.: H01R 9/26

(54) **Auf eine Tragschiene aufschnappbares Gerät**
Rail mounted device
Dispositif encliquetable sur un rail de support

(43) Veröffentlichungstag der Anmeldung: 22.09.2004
(73) Patentinhaber: SIEMENS AKTIENGESELLSCHAFT, 80333 München (DE)
(72) Erfinder: Heindl, Manfred, 93087 Alteglofsheim (DE)

(56) Entgegenhaltungen:
- EP-A- 1 328 051

## Beschreibung

Die Erfindung bezieht sich auf ein auf eine Tragschiene aufschnappbares Gerät gemäß dem Oberbegriff des Anspruchs 1. Ein derartiges Gerät, insbesondere ein Reiheneinbaugerät, z.B. ein Leistungs- oder Leitungsschutzschalter, ist z.B. aus der EP 0 874 433 A2 bekannt.

Zur lösbaren Befestigung eines derartigen Gerätes auf einer genormten Tragschiene oder Hutschiene ist ein im Gerätegehäuse geführter Schieber mit einem Rastelement vorgesehen, das im Montagezustand des Gerätes auf der Tragschiene den entsprechenden Tragschienenrand hintergreift. Dabei stützt sich ein mit dem Schieber verbundenes Federelement auf der dem Rastelement gegenüberliegenden Schieberseite an einer Gehäusekontur des Gerätes ab, so dass das Rastelement den Tragschienenrand unter Federkraft hintergreift und eine Verriegelung des Gerätes auf der Tragschiene bewirkt.

Zum Lösen der Verriegelung steht der Schieber bei dem bekannten Gerät mit einem Betätigungshebel in Wirkeingriff, dessen Betätigungsrichtung senkrecht oder normal zu der vom Schieber aufgespannten Ebene verläuft. Der Betätigungshebel ist dabei von der Geräteoberseite her bedienbar, während an der dieser gegenüberliegenden und der Tragschiene zugewandten Geräteunterseite der Schieber in Querrichtung zur Bewegungsrichtung des Betätigungshebels schiebebeweglich geführt ist.

Bei dem bekannten Gerät ist der Wirkeingriff des Betätigungshebels mit dem Schieber durch einen an diesen federendseitig über einen filmscharnierartigen Ansatz angeformten Riegel realisiert, der unmittelbar in eine entsprechende Aufnahme am Betätigungshebel eingreift. Ein Verschieben des Betätigungshebels bewirkt ein Zurückziehen des Schiebers gegen die Federkraft des Federelementes und damit eine Entriegelung der Verrastung des Gerätes mit der Tragschiene.

Nachteilig bei dieser bekannten Schieberanordnung ist, dass konstruktionsbedingt der beim Lösen der Verriegelung vom Schieber überstrichene Schieberverfahrweg nur sehr gering und daher für ein zuverlässiges Ausfädeln und Abnehmen des Geräts von der Tragschiene in der Praxis häufig nicht groß genug ist. Dies gilt insbesondere bei solchen Konstruktionen, bei denen das Gerätegehäuse in der gehäuseunterseitigen Aufnahmenut für die Tragschiene ein als Widerlager dienendes weiteres, starres oder feststehendes Rastelement aufweist.

Aus der nach dem Anmeldetag der vorliegenden Anmeldung veröffentlichten EP 1 328 051 A1 ist die Verwendung eines einteiligen Riegels bekannt, der einerseits als Rastelement zur Befestigung eines aufschnappbaren Geräts an einer Hutschiene dient, und der andererseits von der Geräteoberseite bedienbar ist. Der Riegel ist gleitend geführt, wobei die Führung nicht geradlinig ist.

Der Erfindung liegt daher die Aufgabe zugrunde, ein auf eine Tragschiene aufschnappbares Gerät derart weiterzubilden, dass bei gleichzeitig großen Haltekräften und einer einfachen Lösbarkeit der Verriegelung ein für ein zuverlässiges Ausfädeln und einfaches Abnehmen des Gerätes ausreichend großer Schieberverfahrweg bereitgestellt ist.

Diese Aufgabe wird erfindungsgemäß gelöst durch die Merkmale des Anspruches 1. Dazu sind bei einem auf eine Tragschiene aufschnappbaren Gerät mit einem im Gerätegehäuse geführten federbelasteten Schieber, der mit einem in einer zumindest annähernd senkrecht zur Gleitebene des Schiebers verlaufenden Bewegungsrichtung verschiebbar geführten Betätigungshebel in Wirkeingriff steht, der Schieber und der Betätigungshebel über einen Schlepphebel miteinander verbunden. Dieser ist in einer im Gerätegehäuse vorgesehenen Schiebekulisse verschiebbar geführt.

Die Schiebekulisse verläuft dabei vorzugsweise zumindest teilweise, d.h. über einen Teil deren Längsausdehnung annähernd parallel zur Bewegungsrichtung des Betätigungshebels.

In vorteilhafter Ausgestaltung ist der Schlepphebel dreischenkelig ausgebildet. Dabei verläuft ein Schenkel des Schlepphebels quer zu dessen zwei weiteren Schenkeln, die ihrerseits zueinander antiparallel verlaufen und somit miteinander fluchten. Bei dieser etwa T-förmigen Ausgestaltung des Schlepphebels ist eine in der Schiebekulisse geführte Hebelachse des Schlepphebels zweckmäßigerweise an dem zu den beiden antiparallelen Schenkeln quer verlaufenden Schenkeln freiendseitig angeordnet. Bei dieser Konstruktion des Schlepphebels liegen die beiden miteinander fluchtenden Schenkel zumindest teilweise außerhalb der Schiebekulisse und verlaufen in Verriegelungsposition des Schiebers zu diesem ebenfalls parallel. In dieser Verriegelungsposition des Schiebers bildet somit der Schlepphebel eine mit dem Schieber fluchtende Verlängerung desselben.

Die Hebelachse des Schlepphebels ist sowohl zum Betätigungshebel als auch zum Federende des Schiebers - und damit zu den jeweiligen Verbindungspunkten zum Betätigungshebel einerseits sowie zum Schieber andererseits - beabstandet. Dabei können die Abstände gleich groß sein. Vorzugsweise ist jedoch der Abstand der Hebelachse zum Schieber- oder Federende größer als der Abstand der Hebelachse zum Betätigungshebel. Auch kann der die Länge des dritten Schenkels bestimmende Abstand der Hebelachse zum Schlepphebel gleich Null sein, so dass dieser dann praktisch zweischenklig ist.

Letztendlich bestimmt die Position der Hebelachse entlang des Schlepphebels das Übersetzungsverhältnis zwischen der - bei lotrecht auf die Tragschiene aufgesetztem Gerät - vertikalen Hebelbewegung des Betätigungshebels und der hierzu quer verlaufenden horizontalen Schieberbewegung. Somit führt bei linearer Ziehbewegung des Betätigungshebels aus dessen Ruhelage in vertikale Richtung nach oben die fest mit dem Schlepphebel verbundene Hebelachse eine durch die Schiebekulisse vorgegebene und damit definierte Bewegung aus, welche über die gelenkige Verbindung zwischen dem Schlepphebel und dem Schieber in eine sich beschleunigende horizontale Bewegung des Schiebers umgewandelt wird.

Die Schiebekulisse weist für den Schlepphebel zweckmäßigerweise sowohl eine Anlagekontur zur Selbsthemmung bei verriegeltem Schieber als auch eine Anschlagkontur bei entriegeltem Schieber auf. Hierzu und insbesondere für den nach einem bestimmten Übersetzungsverhältnis vollzogenen Bewegungsablauf des Schiebers bei dessen Überführung vom verriegelten oder verrasteten in den entriegelten bzw. entrasteten Zustand - und damit zum Lösen des Gerätes von der Tragschiene - ist die Schiebekulisse vorzugsweise als bogenförmiges Langloch ausgebildet. Dabei ist das Langloch bezogen auf den Betätigungshebel oder dessen Bewegungsrichtung konvex gekrümmt. Dadurch bewegt sich die in der Kulisse geführte Hebelachse des Schlepphebels - ausgehend von der Anlagekontur - während des Bewegungsablaufes des Betätigungshebels zum Entriegeln des Schiebers zunächst in Richtung vom Betätigungshebel weg. Anschließend bewegt sich die Hebelachse nach Überschreiten des durch die Bogenform (mit bestimmtem Krümmungsradius) der langlochartigen Schiebekulisse vorgegebenen Maximums in Richtung auf den Betätigungshebel zu.

In besonders vorteilhafter Ausgestaltung sind der Schieber, der Schlepphebel und der Betätigungshebel ein einstückiges Formteil. Dieses, nachfolgend auch als Schiebersystem bezeichnete Formteil umfasst auch die zweckmäßigerweise an den Schlepphebel angeformte Hebelachse. Dabei sind die Verbindungen zwischen dem Schieber und dem Schlepphebel einerseits sowie zwischen diesem und dem Betätigungshebel andererseits durch Filmscharniere gebildet. Diese bilden somit in der Verbindung des Schiebers über den Schlepphebel mit dem Betätigungshebel zwei Gelenkpunkte aus. Anstelle dieses zweigliedrigen Schiebersystems kann auch eine Achsen- und Scharnierlösung als mehrgliedriges System vorgesehen sein.

Der Betätigungshebel ist zweckmäßigerweise zur Bildung oder Freilassung eines Anschlussklemmenraumes rahmen- oder stegartig ausgebildet. Zudem ist am Betätigungshebel vorzugsweise eine Rastnase angeformt, die in Ent- und/oder Verriegelungsstellung des Schiebers in korrespondierende Aussparungen im Gerätegehäuse eingreift. Dadurch wird eine fühl- oder spürbare Verrastung des Betätigungshebels sowohl in EIN- als auch in AUS-Stellung erreicht.

Die mit der Erfindung erzielten Vorteile bestehen insbesondere darin, dass durch eine vorzugsweise einteilige Ausführung eines über einen in einer Gehäuse- oder Schiebekulisse geführten Schlepphebels mit einem Betätigungshebel verbundenen Rastschiebers einerseits eine zuverlässige Verriegelung eines mit einem solchen System ausgeführten Gerätes auf einer genormten Tragschiene oder Hutschiene erreicht wird. Andererseits ist aufgrund des mit einem solchen, nach Art einer Mehrgelenkkette ausgebildeten einteiligen Rastschiebersystem erreichten relativ großen Schieberweges ein zuverlässiges Entriegeln und damit ein sicheres Ausfädeln und Abnehmen des Gerätes von der Tragschiene gewährleistet.

Zudem kann durch die Gestaltung der Schiebekulisse selbst sowie die Positionierung einer in dieser geführten Hebelachse des Schlepphebels das Übersetzungsverhältnis des Schlepphebels praktisch frei gewählt und damit eine Schieberbewegung definiert werden, die am Anfang oder Beginn der Entriegelungs- bzw. Lösungsbewegung einen vergleichsweise kleinen Schieberweg und eine vergleichsweise gering Betätigungskraft des Betätigungshebels bewirkt, während entlang des weiteren Verfahrweges des Betätigungshebels der damit verbundene, vom Schieber zurückgelegte Weg zunehmend größer wird. Dies ermöglicht ein besonders einfaches und zuverlässiges Lösen des Gerätes, insbesondere eines Reiheneinbaugerätes oder Schutzschalters, aus einem verschienten Geräteverbund.

Das beschriebene Schiebersystem ist insgesamt besonders kostengünstig und ermöglicht ein hiermit ausgestattetes Gerät werkzeuglos sowie zuverlässig in einen - ggf. mittels handelsüblicher Sammelschienen verschienten - Geräteverbund zu platzieren bzw. aus diesem zu entnehmen. Dabei ist ein einzelnes derartiges Schiebersystem ausreichend.

Nachfolgend wird ein Ausführungsbeispiel der Erfindung anhand einer Zeichnung näher erläutert. Darin zeigen:
- FIG 1: schematisch in einer Seitenansicht ein teilweise geöffnetes und gegenüber einer Tragschiene positioniertes Gerät mit einem entriegelten, mehrgliedrigen Schiebersystem,
- FIG 2: das Schiebersystem in perspektivischer Darstellung,
- FIG 3: ausschnittsweise das Gerät nach FIG 1 mit verriegeltem Schiebersystem, und
- FIG 4: in einer Darstellung gemäß FIG 3 das Schiebersystem in entriegeltem Zustand.

Einander entsprechende Teile sind in allen Figuren mit den gleichen Bezugszeichen versehen.

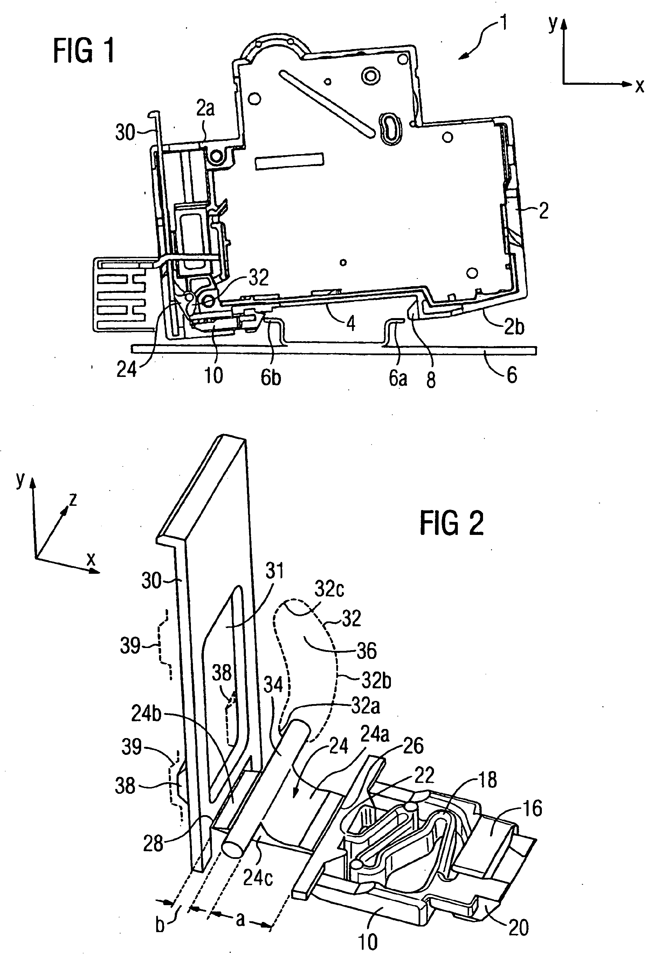

FIG 1 zeigt ein Schaltgerät 1 mit einem Gerätegehäuse 2 mit einer Geräteoberseite 2a und einer Geräteunterseite 2b, an der eine Gehäusenut 4 zur Aufnahme einer Trag- oder Hutschiene 6 vorgesehen ist.

Zur lösbaren Befestigung des Gerätes 1, insbesondere eines Reiheneinbaugerätes, z.B. eines Schutzschalters, weist dieses an der Geräteunterseite 2b im Bereich der Gehäusenut 4 einen gehäusefesten Rasthaken 8 und auf der gegenüberliegenden Nutseite einen federbelasteten Rastschieber 10 auf. Bei Verrastung des Gerätes 1 auf der Tragschiene 6 hintergreift der gehäusefeste Rasthaken 8 den diesem zugewandten Tragschienenrand 6a der Tragschiene 6.

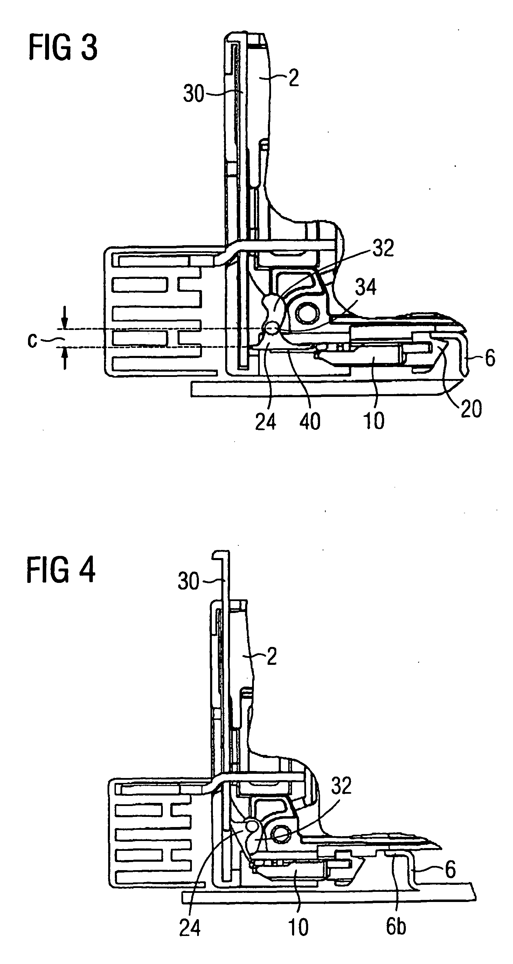

Wie aus FIG 3 vergleichsweise deutlich ersichtlich ist, hintergreift im verriegelten Zustand auch der federbelastete Schieber 10 den diesem zugewandten Tragschienenrand 6b der Tragschiene 6. Der Schieber 10 ist an Punkten 12 und 14 in entsprechenden, nicht näher bezeichneten Gehäuseaussparungen derart gelagert, dass lediglich eine Bewegung in x-Richtung parallel zur Gehäuseunterseite 2b und zum Tragschienenrand 6a,6b möglich ist.

Wie aus FIG 2 ersichtlich ist, weist der rahmenartig ausgestaltete Schieber 10 ein an einem äußeren Schieberrahmen 16 angeformtes und mäanderförmig ausgeformtes Federelement 18 auf. Der Schieber 10 umfasst zudem am äußeren Schieberrahmen 16 an der der Feder 18 gegenüberliegenden Seite einen angeformten Rasthaken 20, der im verriegelten Zustand des Gerätes 1 auf der Tragschiene 6 den entsprechenden Tragschienenrand 6b hintergreift.

Das dem äußeren Schieberrahmen 16 gegenüberliegende Federende 22 des Federelementes 18 ist mit einem Schlepphebel 24 verbunden. Diese Verbindung zwischen dem Federfreiende 22 und einem entsprechenden ersten Schenkel 24a des dreischenklig ausgeführten Schlepphebels 24 ist als Filmscharnier 26 ausgebildet. Am mit diesem ersten Schenkel 24 fluchtenden zweiten Schenkel 24b des Schlepphebels 24 ist - vorzugsweise wiederum über ein Filmscharnier 28 angeformt - ein Löseelement oder Betätigungshebel 30 befestigt. Dieser steg- oder rahmenartig ausgeführte Betätigungshebel 30 lässt einen Klemmenanschlussraum 31 frei.

Der Betätigungshebel 30 verläuft quer zur Erstreckungsrichtung (x-Richtung) des Schiebers 10. Die - bezogen auf das dargestellte Koordinatensystem - vom sich in y-Richtung erstreckenden Betätigungshebel 30 aufgespannte yz-Ebene steht somit senkrecht auf der durch den Schieber 10 aufgespannten und dessen Gleitebene darstellenden xz-Ebene.

Der Schlepphebel 24 ist über eine in FIG 2 strichliniert angedeutete Schiebekulisse 32 geführt. Die Schiebekulisse 32 ist in das Gerätegehäuse 2 eingebracht. Die Führung des Schlepphebels 24 in der Schiebekulisse 32 erfolgt über einen quer zu den beiden miteinander fluchtenden Schenkeln 24a,24b verlaufenden dritten Schenkel 24c des Schlepphebels 24. Hierzu ist endseitig an den Schenkel 24c des Schlepphebels 24 eine Hebelachse 34 angeformt oder angesetzt, die beidendseitig in der Schiebekulisse 32 einliegt und somit dort geführt ist. Die Schiebekulisse 32 selbst ist als bogenförmiges Langloch 36 ausgebildet. Dabei ist die Bogenform - bezogen auf den sich in y-Richtung erstreckenden Betätigungshebel 30 - konvex gekrümmt.

Der Schieber 10 und der Schlepphebel 24 sowie der Betätigungshebel 30 sind zweckmäßigerweise ein einstückiges oder einteiliges Formteil. Zweckmäßigerweise ist das sich aus diesen drei Teilen, nämlich dem Schieber 10 mit der mäanderförmigen Feder 18 und dem Schlepphebel 24 sowie dem Betätigungshebel 30, zusammensetzende Schiebersystem S als zusammenhängendes Kunststoffspritzteil ausgeführt. Die Filmscharniere 26 und 28 bilden dabei achsen- oder scharnierartige Gelenkpunkte des Schiebersystems S zwischen dem Schieber 10 bzw. der mit diesem einstückig verbundenen Feder 18 und dem Schlepphebel 22 einerseits sowie zwischen diesem und dem Betätigungshebel 30 andererseits. Die Hebelachse 34 ist an das Schiebersystem S ebenfalls einstückig angeformt.

Zum Lösen und Abheben des Gerätes 1 von der Tragschiene 6 wird der Schieber 10 durch Ziehen des Betätigungshebels 30 in y-Richtung von der in FIG 3 dargestellten Position in die in FIG 4 dargestellte Position in verschoben. Dabei durchläuft die Hebelachse 34 des Schlepphebels 24 die Schiebekulisse 32 - ausgehend von einer in dieser gebildeten Anlagekontur 32a - entlang des bogenförmigen Verlaufs 32b des Langlochs 36. Während dabei die Hebelachse 34 die Schiebekulisse 32 zumindest annähernd parallel zur y-Richtung bis zu einer Anschlagkontur 32c der Schieberkulisse 32 durchläuft, verfährt der Schieber 10 in dessen Gleitebene vom Tragschienenrand 6b weg und auf den Betätigungshebel 30 zu.

Die Anlagekontur 32a dient dabei gleichzeitig zur Selbsthemmung des Schlepphebels 24 in der in FIG 3 dargestellten Verriegelungsposition des Schiebers 10. Die Anschlagkontur 32c dient in der in FIG 4 dargestellten Entriegelungsposition des Schiebers 10 als Anschlag sowohl für den Betätigungshebel 30 als auch für den Schieber 10 und damit für das Schiebersystem S. Eine am Betätigungshebel 30 angebrachte oder angeformte Rastnase 38 - oder bei rahmenartigem Betätigungshebel 30 jede von zwei dieser Rastnasen 38 - dient zusammen mit entsprechenden, in FIG 2 schematisch dargestellten korrespondierenden Aussparungen 39 im Gehäuse 2 zum fühlbaren Verrasten des Betätigungshebels 30 in der verriegelten bzw. entriegelten Stellung (EIN-/AUS-Stellung) des Rastschiebers 10.

Die Hebelachse 34 des Schlepphebels 24 ist zum Betätigungshebel 30 einerseits sowie zum Federende 22 und damit zum Schieber 10 andererseits beabstandet. Die Hebelachse 34 liegt zudem um den Abstand c oberhalb der Unterkante 40 des Schlepphebels 24 (FIG 3). Die Abstände a,b können gleich groß sein. Vorzugsweise ist jedoch der Abstand a der Hebelachse 34 zum Feder- bzw. Schieberende 22 größer als der Abstand b der Hebelachse 34 zum Betätigungshebel 30.

Die Position der Hebelachse 34 entlang des Schlepphebels 24 bestimmt das Übersetzungsverhältnis zwischen der in y-Richtung verlaufenden vertikalen Ziehbewegung des Betätigungshebels 30 und der hierzu quer in x-Richtung verlaufenden horizontalen Verfahrbewegung des Schiebers 10. Somit führt bei linearer Ziehbewegung des Betätigungshebels 30 aus dessen Ruhelage in vertikale Richtung nach oben die fest mit dem Schlepphebel 24 verbundene Hebelachse 34 eine durch die Schiebekulisse 32 vorgegebene definierte Bewegung aus. Diese wird über die gelenkige Verbindung 26 zwischen dem Schlepphebel 32 und dem Schieber 10 in eine sich beschleunigende horizontale Bewegung des Schiebers 10 umgewandelt.

Dabei ist der Weg des Schiebers 10 über die Ausformung oder Ausgestaltung der Kontur der Schiebekulisse 32, in der die Hebelachse 34 geführt wird, an die jeweils gewünschten oder erforderlichen Konstruktionsbedingungen anpassbar.

Weitere Anpassungsmöglichkeiten an die gewünschten oder geforderten Bedingungen hinsichtlich eines einfachen Lösens und zuverlässigen Entriegelns sowie Ausfädelns und Abhebens des Gerätes 1 von der Tragschiene 6 ergeben sich durch die Wahl oder Vorgabe der Lage der Hebelachse 34 entlang des Schlepphebels 24. Diese Lage wird bestimmt durch die Größe oder das Maß einerseits der Abstände a und b bzw. des Abstandsverhältnisses a/b sowie andererseits des Abstandes c, d.h. der Entfernung der Hebelachse 34 zum Schlepphebel 24 bzw. dessen Unterkante 40.

Dabei kann das Maß c - und damit der Abstand c der Hebelachse 34 zum Schlepphebel 24 - auch c = 0 sein. In diesem Fall ist der Schlepphebel 24 lediglich zweischenklig mit den beiden Schenkeln 24a und 24b ausgeführt. Die Hebelachse 34 liegt dann quasi im Übergang vom ersten Schenkels 243a zum zweiten Schenkel 24b des Schlepphebels 24.

## Patentansprüche

1. Auf eine Tragschiene (6) aufschnappbares Gerät (1) mit einem in einem Gerätegehäuse (2) geführten federbelasteten Schieber (10), der an seinem Verriegelungsende (16) ein Rastelement (20) zum Hintergreifen eines Tragschienenrandes (6b) aufweist, und der an seinem gegenüberliegenden Schieberende (22) mit einem Betätigungshebel (30) in Wirkeingriff steht, der in einer zumindest annähernd senkrecht zur Gleitebene (xz) des Schiebers (10) verlaufenden Bewegungsrichtung (y) verschiebbar geführt ist,
**gekennzeichnet durch** einen einerseits mit dem Federende (22) des Schiebers (10) und andererseits mit dem Betätigungshebel (30) verbundenen Schlepphebel (24), der in einer Schiebekulisse (32) geführt ist.

2. Gerät nach Anspruch 1,
**dadurch gekennzeichnet, dass** der Schlepphebel (24) eine Hebelachse (34) aufweist, die endseitig in der Schiebekulisse (32) einliegt.

3. Gerät nach Anspruch 1 oder 2,
**dadurch gekennzeichnet, dass** der Schlepphebel (24) mehrschenklig ausgebildet ist, wobei ein erster Schenkel (24a) mit dem Schieber (10) und ein mit dem ersten Schenkel (24a) fluchtender zweiter Schenkel (24b) mit dem Betätigungshebel (30) verbunden ist.

4. Gerät nach Anspruch 3,
**dadurch gekennzeichnet, dass** der Schlepphebel (24) dreischenklig ausgebildet ist, wobei die Hebelachse (34) am Freiende eines quer zu den miteinander fluchtenden Schenkeln (24a, 24b) verlaufenden dritten Schenkels (24c) vorgesehen ist.

5. Gerät nach einem der Ansprüche 2 bis 4,
**dadurch gekennzeichnet, dass** die Hebelachse (34) sowohl zum Betätigungshebel (30) als auch zum Schieber (10) beabstandet ist, wobei der Abstand (a) der Hebelachse (34) zum Schieber (10) größer als der oder gleich dem Abstand (b) der Hebelachse (34) zum Betätigungshebel (30) ist.

6. Gerät nach Anspruch 5,
**dadurch gekennzeichnet, dass** die Hebelachse (34) derart entlang des Schlepphebels (24) positioniert ist, dass ein vorgebbares Übersetzungsverhältnis zwischen der Bewegung des Betätigungshebels (30) und der hierzu quer verlaufenden Bewegung des Schiebers (10) bestimmt ist.

7. Gerät nach einem der Ansprüche 1 bis 6,
**dadurch gekennzeichnet, dass** die Schiebekulisse (32) eine Anlagekontur (32a) für den Schlepphebel (34) ausbildet, die diesen bei verriegeltem Schieber (10) in einer selbsthemmenden Position hält.

8. Gerät nach einem der Ansprüche 1 bis 7,
**dadurch gekennzeichnet, dass** die Schiebekulisse (32) eine Anschlagkontur (32c) für den Schlepphebel (24) bei entriegeltem Schieber (10) ausbildet.

9. Gerät nach einem der Ansprüche 1 bis 8,
**dadurch gekennzeichnet, dass** die Schiebekulisse (32) als bogenförmiges Langloch (36) ausgebildet ist.

10. Gerät nach einem der Ansprüche 1 bis 9,
**dadurch gekennzeichnet, dass** die Schiebekulisse (32) zumindest teilweise annähernd parallel zur Bewegungsrichtung (y) des Betätigungshebels (30) verläuft.

11. Gerät nach einem der Ansprüche 1 bis 10,
**dadurch gekennzeichnet, dass** der Schieber (10) und der Schlepphebel (24) sowie der Betätigungshebel (30) ein einstückiges Formteil sind.

12. Gerät nach einem der Ansprüche 1 bis 11,
**dadurch gekennzeichnet, dass** die Verbindung zwischen dem Schieber (10) und dem Schlepphebel (24) einerseits sowie zwischen diesem und dem Betätigungshebel (30) andererseits unter Gelenkbildung als Filmscharniere (26, 28) ausgeführt sind.

13. Gerät nach einem der Ansprüche 1 bis 12,
**dadurch gekennzeichnet, dass** der Betätigungshebel (30) rahmenartig ausgebildet ist.

14. Gerät nach einem der Ansprüche 1 bis 13,
**dadurch gekennzeichnet, dass** am Betätigungshebel (30) eine Rastnase (38) angeformt ist, die in Ent- und/oder Verriegelungsstellung des Schiebers (10) in korrespondierende Aussparungen (39) im Gerätegehäuse (2) eingreift.

## Claims

1. Device (1) for snap-on mounting onto a mounting rail (6) having a sprung slider (10) guided in a device housing (2), said sprung slider (10) having at its locking end (16) a locking member (20) for gripping behind a mounting rail edge (6b) and actively engaging at its opposite slider end (22) with an actuating lever (30) which is movably guided in a movement direction (y) running at least approximately perpendicularly to the sliding plane (xz) of the slider (10), **characterised by** a pull-lever (24) which is connected on the one side to the spring end (22) of the slider (10) and on the other side to the actuating lever (30) and which is guided in a slide link (32).

2. Device according to claim 1,
**characterised in that** the pull-lever (24) has a lever axle (34), the ends of which are inserted in the slide link (32).

3. Device according to claim 1 or 2,
**characterised in that** the pull-lever (24) is embodied with multiple sides, a first side (24a) being connected to the slider (10) and a second side (24b) aligned with the first side (24a) being connected to the actuating lever (30).

4. Device according to claim 3,
**characterised in that** the pull-lever (24) is embodied with three sides, the lever axle (34) being provided at the free end of a third side (24c) running transversely to the sides (24a, 24b) that are aligned with each other.

5. Device according to one of the claims 2 to 4,
**characterised in that** the lever axle (34) is spaced at a distance both from the actuating lever (30) and from the slider (10), the distance (a) between the lever axle (34) and the slider (10) being greater than or equal to the distance (b) between the lever axle (34) and the actuating lever (30).

6. Device according to claim 5,
**characterised in that** the lever axle (34) is positioned along the pull-lever (24) in such a way that a predefinable transmission ratio is determined between the movement of the actuating lever (30) and the movement of the slider (10) running transversely hereto.

7. Device according to one of the claims 1 to 6,
**characterised in that** the slide link (32) forms a bearing contour (32a) for the pull-lever (34), which bearing contour (32a) holds said pull-lever (34) in a self-retaining position when the slider (10) is locked.

8. Device according to one of the claims 1 to 7,
**characterised in that** the slide link (32) forms a bearing contour (32c) for the pull-lever (24) when the slider (10) is unlocked.

9. Device according to one of the claims 1 to 8,
**characterised in that** the slide link (32) is embodied as a curved longitudinal slot (36).

10. Device according to one of the claims 1 to 9,
**characterised in that** the slide link (32) runs at least approximately parallel to the movement direction (y) of the actuating lever (30).

11. Device according to one of the claims 1 to 10,
**characterised in that** the slider (10) and the pull-lever (24) together with the actuating lever (30) are a single-piece formed part.

12. Device according to one of the claims 1 to 11,
**characterised in that** the connections between the slider (10) and the pull-lever (24) on the one hand and between the pull-lever (24) and the actuating lever (30) on the other hand are implemented as film hinges (26, 28) while forming a hinged joint.

13. Device according to one of the claims 1 to 12,
**characterised in that** the actuating lever (30) is embodied in the manner of a frame.

14. Device according to one of the claims 1 to 13,
**characterised in that** a locating lug (38) is moulded on the actuating lever (30), said locating lug (38) engaging in corresponding recesses (39) in the device housing (2) when the slider (10) is in the unlocked and/or locked position.

## Revendications

1. Appareil (1) encliquetable sur un rail (6) de support, comprenant un coulisseau (10) sollicité par ressort, guidé dans un boîtier (2) d'appareil et qui comporte à son extrémité (16) de verrouillage un élément (20) d'encliquetage pour s'engager derrière un bord (6b) du rail de support, et qui se trouve, à son extrémité (22) opposée de coulisseau, en engagement actif avec un levier (30) d'actionnement qui est guidé en translation dans une direction (y) de déplacement s'étendant au moins approximativement perpendiculairement au plan (xz) de glissement du coulisseau (10),
**caractérisé par** un levier (24) entraîneur, qui est relié d'une part à l'extrémité (22) de ressort du coulisseau (10) et d'autre part au levier (30) d'actionnement et qui est guidé dans une coulisse (32).

2. Appareil suivant la revendication 1, **caractérisé en ce que** le levier (24) entraîneur possède un axe (34) de levier qui s'insère terminalement dans la coulisse (32).

3. Appareil suivant la revendication 1 ou 2,
**caractérisé en ce que** le levier (24) entraîneur est réalisé à plusieurs branches, une première branche (24a) étant reliée au coulisseau (10) et une deuxième branche (24b), alignée avec la première branche (24a), étant reliée au levier (30) d'actionnement.

4. Appareil suivant la revendication 3, **caractérisé en ce que** le levier (24) entraîneur est réalisé à trois branches, l'axe (34) de levier étant prévu à l'extrémité libre d'une troisième branche (24c) s'étendant transversalement aux branches (24a, 24b) mutuellement alignées.

5. Appareil suivant l'une des revendications 2 à 4,
**caractérisé en ce que** l'axe (34) de levier est distant à la fois du levier (30) d'actionnement et du coulisseau (10), la distance (a) entre l'axe (34) de levier et le coulisseau (10) étant supérieure ou égale à la distance (b) entre l'axe (34) de levier et le levier (30) d'actionnement.

6. Appareil suivant la revendication 5, **caractérisé en ce que** l'axe (34) de levier est positionné le long du levier (24) entraîneur de telle sorte qu'un rapport de transformation prescriptible est défini entre le mouvement du levier (30) d'actionnement et le mouvement, s'étendant transversalement au précédent, du coulisseau (10).

7. Appareil suivant l'une des revendications 1 à 6,
**caractérisé en ce que** la coulisse (32) forme un contour (32a) d'application pour le levier (24) entraîneur, qui maintient ce dernier dans une position autobloquante lorsque le coulisseau (10) est verrouillé.

8. Appareil suivant l'une des revendications 1 à 7,
**caractérisé en ce que** la coulisse (32) forme un contour (32c) de butée pour le levier (24) entraîneur lorsque le coulisseau (10) est déverrouillé.

9. Appareil suivant l'une des revendications 1 à 8,
**caractérisé en ce que** la coulisse (32) est réalisée sous forme de trou (36) oblong cintré.

10. Appareil suivant l'une des revendications 1 à 9,
**caractérisé en ce que** la coulisse (32) s'étend au moins partiellement environ parallèlement à la direction (y) de déplacement du levier (30) d'actionnement.

11. Appareil suivant l'une des revendications 1 à 10,
**caractérisé en ce que** le coulisseau (10) et le levier (24) entraîneur ainsi que le levier (30) d'actionnement sont une pièce moulée d'un seul tenant.

12. Appareil suivant l'une des revendications 1 à 11,
**caractérisé en ce que** la liaison entre le coulisseau (10) et le levier (24) entraîneur d'une part et la liaison entre ce levier et le levier (30) d'actionnement d'autre part sont réalisées sous la forme de charnières (26, 28) souples formant des articulations.

13. Appareil suivant l'une des revendications 1 à 12,
**caractérisé en ce que** le levier (30) d'actionnement est du genre cadre.

14. Appareil suivant l'une des revendications 1 à 13,
**caractérisé en ce qu'**un bec (38) d'encliquetage est formé sur le levier (30) d'actionnement, bec qui, dans la position de déverrouillage et/ou de verrouillage du coulisseau (10), pénètre dans des évidements (39) correspondants dans le boîtier (2) d'appareil.
